# EUROPEAN PATENT APPLICATION

(11) **EP 2 495 432 A1**
(43) Date of publication of application: **05.09.2012**
(21) Application number: 11156717.8
(22) Date of filing: 03.03.2011
(51) Int. Cl.: F03B 17/00, F03B 7/00

(54) **Energy transduction device with a water wheel**

(71) Applicant: Lin, Hsien-Ming, Hsinchu Hsien 302 (TW)
(72) Inventor: Lin, Hsien-Ming, Hsinchu Hsien 302 (TW)
(74) Representative: Horak, Michael

(57) **Abstract**

The transduction device contains a rotation assembly (1) mounted on a rack (4) and the rotation assembly (1) contains an axle (11) and a wheel member (12) around the axle (11). A U-shaped track is formed along the circumference of the wheel member (12) and a number of radial partition plates (13) are configured periodically, thereby forming a number of chambers (14) within the U-shaped track. The axle (11) is linked to an accelerator member (2) which in turn is linked to a generator member (3). The transduction device is placed tangentially to a water flow so that the chambers (14) could receive and accumulate water. By the weight and push of the water, the rotation assembly spins in a fixed direction. Further by the acceleration of the acceleration member (2), the generator member (3) is engaged to produce electrical energy.

## Description

### (a) Technical Field of the Invention

The present invention is generally related to energy transduction devices, and more particularly to a transduction device turning water potential energy into electrical energy

### (b) Description of the Prior Art

Conventional electricity generation includes thermoelectricity generation, hydroelectricity generation, wind power generation, and nuclear power generation. Thermoelectricity generation requires fossil fuel that is already depleting and is one of the major causes to global warming.

For hydroelectricity generation, costly dams have to be built and there are only limited places where hydroelectricity generation is appropriate.

For wind power generation, again costly wind turbines have to be built and only places with constant and strong wind are appropriate.

Nuclear power generation is a most cost effective approach. Yet its safety and the deposit of nuclear waste have been constantly questioned and challenged by environmental protectionists.

### SUMMARY OF THE INVENTION

Therefore, a novel transduction device is provided herein, which turns water potential energy into electrical energy The device does not require ignition and water could be recycled for continuous operation.

The transduction device contains a rotation assembly mounted on a rack and the rotation assembly contains an axle and a wheel member around the axle. A U-shaped track is formed along the circumference of the wheel member and a number of radial partition plates are configured periodically, thereby forming a number of chambers within the U-shaped track. The axle is linked to an accelerator member which in turn is linked to a generator member. The transduction device is placed tangentially to a water flow so that the chambers could receive and accumulate water. By the weight and push of the water, the rotation assembly spins in a fixed direction. Further by the acceleration of the acceleration member, the generator member is engaged to produce electrical energy.

A universal joint is used to couple the rotation assembly and the accelerator member, and to couple the accelerator member and the generator member, so as to achieve smooth transmission.

The foregoing objectives and summary provide only a brief introduction to the present invention. To fully appreciate these and other objects of the present invention as well as the invention itself, all of which will become apparent to those skilled in the art, the following detailed description of the invention and the claims should be read in conjunction with the accompanying drawings. Throughout the specification and drawings identical reference numerals refer to identical or similar parts.

Many other advantages and features of the present invention will become manifest to those versed in the art upon making reference to the detailed description and the accompanying sheets of drawings in which a preferred structural embodiment incorporating the principles of the present invention is shown by way of illustrative example.

### BRIEF DESCRIPTION OF THE DRAWINGS

FIG 1 is a perspective diagram showing a transduction device according to a first embodiment of the present invention.
FIG 2 is a sectional diagram the transduction device of FIG 1.
FIGS. 3 and 4 show an operation scenario of the transduction device of FIG. 1.
FIG 5 is a schematic sectional diagram showing a second embodiment of the present invention.
FIG 6 is a schematic sectional diagram showing a third embodiment of the present invention.
FIG 7 is a schematic sectional diagram showing a fourth embodiment of the present invention.

### DETAILED DESCRIPTION OF THE PREFERRED EMBODIMENTS

The following descriptions are exemplary embodiments only, and are not intended to limit the scope, applicability or configuration of the invention in any way. Rather, the following description provides a convenient illustration for implementing exemplary embodiments of the invention. Various changes to the described embodiments may be made in the function and arrangement of the elements described without departing from the scope of the invention as set forth in the appended claims.

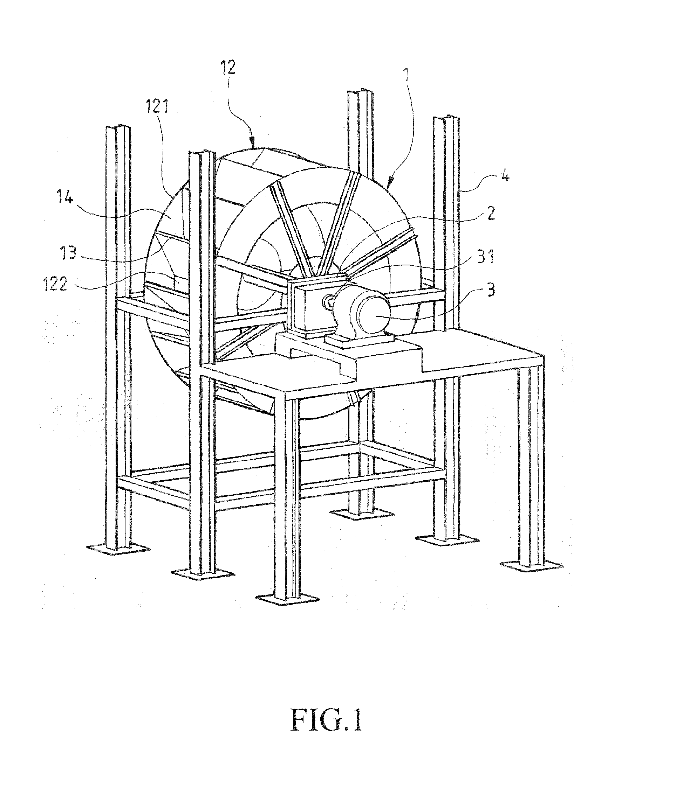

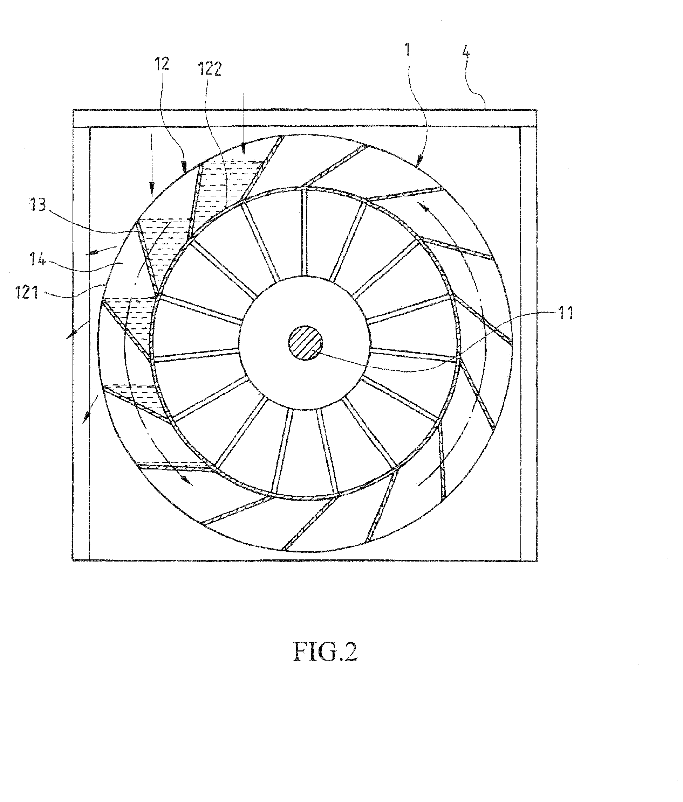

As shown in FIGS. 1 and 2, a transduction device according to a first embodiment of the present invention contains a rotation assembly 1, an acceleration member 2 linked to the rotation assembly 1, and a generator member 3 linked to the acceleration member 2. The rotation assembly 1 contains an axle 11 and a wheel member 12 around the axle 11. The axle 11 is mounted on a rack 4 by bearings so that the wheel member 12 is able to spin pivotally around the axle 11. A U-shaped track is formed along the circumference of the wheel member 12 by a rim band 122 sandwiched between two ring walls 121. Within the U-shaped track, a number of radial partition plates 13 are configured periodically and tilted to a direction opposite to the rotation direction of the wheel member 12. The U-shaped track is thereby partitioned into a number of chambers 14. By forming the chambers 14 farter away or closer to the axle 11, thereby altering the torque exerted, the rotational speed of the rotation assembly 1 could be varied.

The axle 11 of the rotation assembly 1 is pin joined to the accelerator member 2 which in turn is pin joined to a universal joint 31 that is connected to the generator member 3 (i.e., an electrical generator).

The transduction device as described above is placed tangentially to a water flow so that the chambers 14 could receive and accumulate water. By the weight and push of the water, the rotation assembly 1 spins in a fixed direction. Further by the acceleration of the acceleration member 2, the generator member 3 is engaged to produce electrical energy.

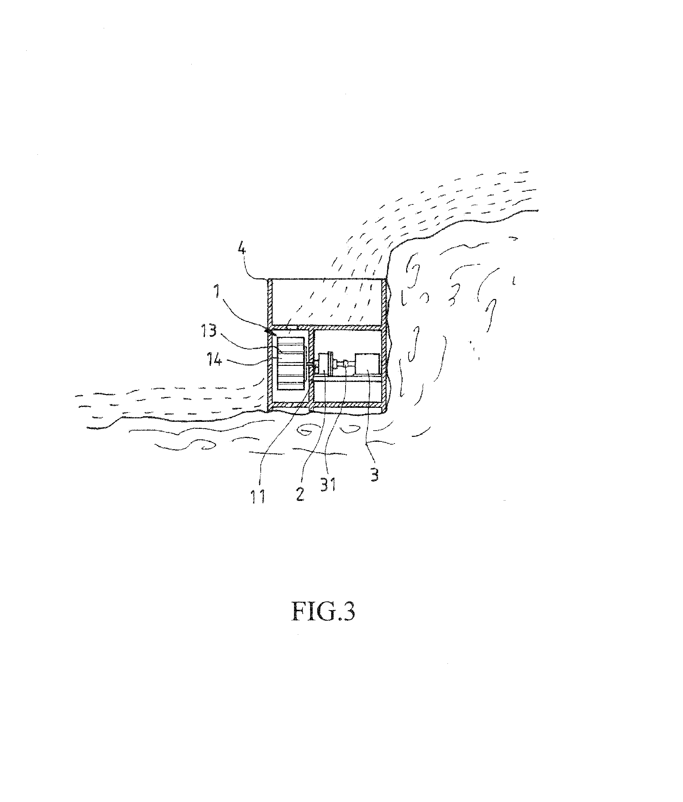

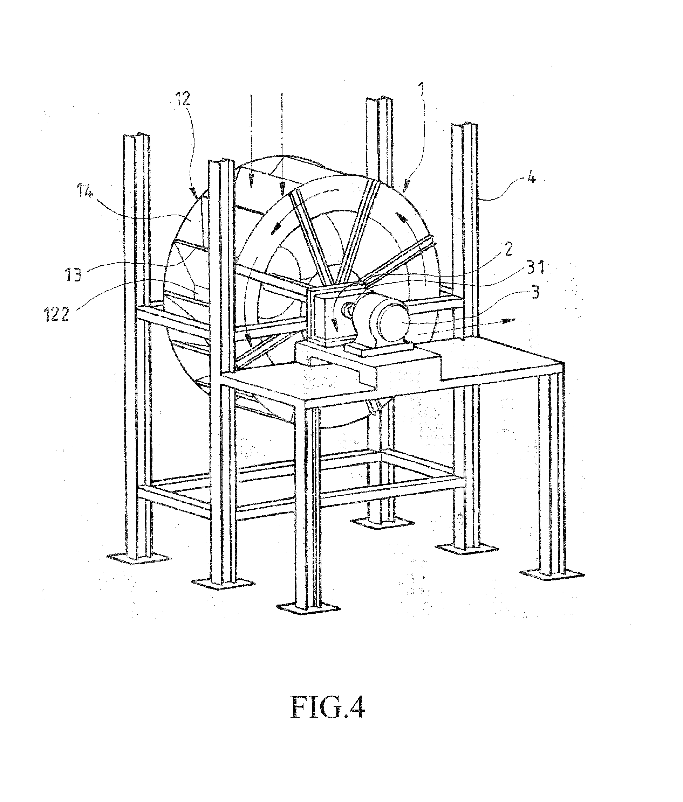

As illustrated in FIGS. 3 and 4, the transduction device is placed beneath a water flow (e.g., river or creek) so that water directly fills the chambers 14. By the weight and push of the water, the rotation assembly 1 spins in a fixed direction and, after being accelerated by the acceleration member 2, the generator member 3 is engaged to produce electrical energy. Please note that a universal joint 31 is used to couple the rotation assembly and the accelerator member 2, and to couple the accelerator member 2 and the generator member 3, so as to achieve smooth transmission.

As shown in FIG 2, the distance between the chambers 14 to the axle 11 determines the lever length of torque exerted on the rotation assembly 1. Additionally, by enlarging the width of the chambers 14 (i.e., the distance between the ring walls 121), the force exerted on the rotation assembly 1 is increased, thereby achieving higher energy conversion efficiency.

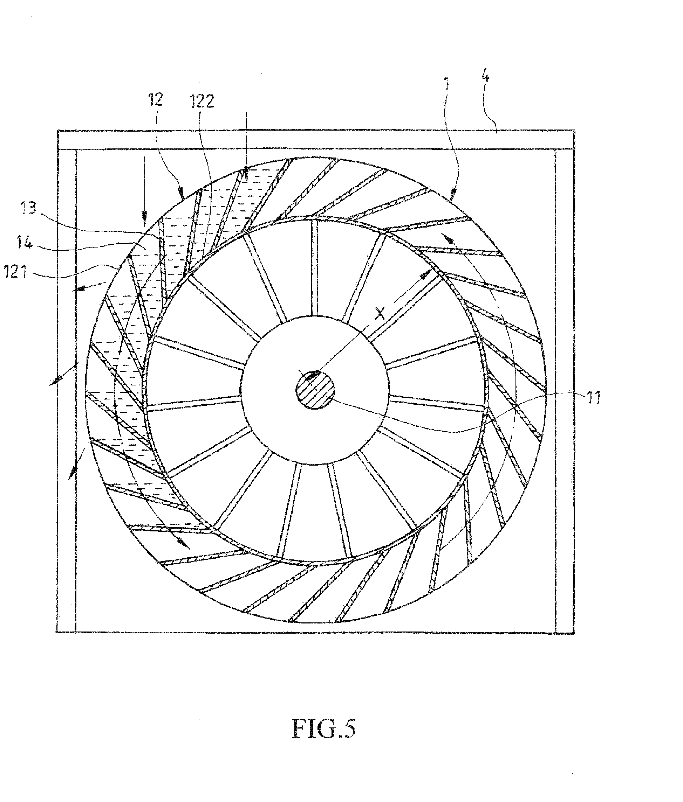

In a second embodiment of the present invention as illustrated in FIG 5, twice as many partition plates 13 are configured, thereby forming twice as many chambers 14. As such, the surface area receiving the pressure of water flow is enlarged, thereby achieving a greater torque to the rotation assembly 1. The rotation assembly 1 therefore spins at a higher speed and as such produces more electricity.

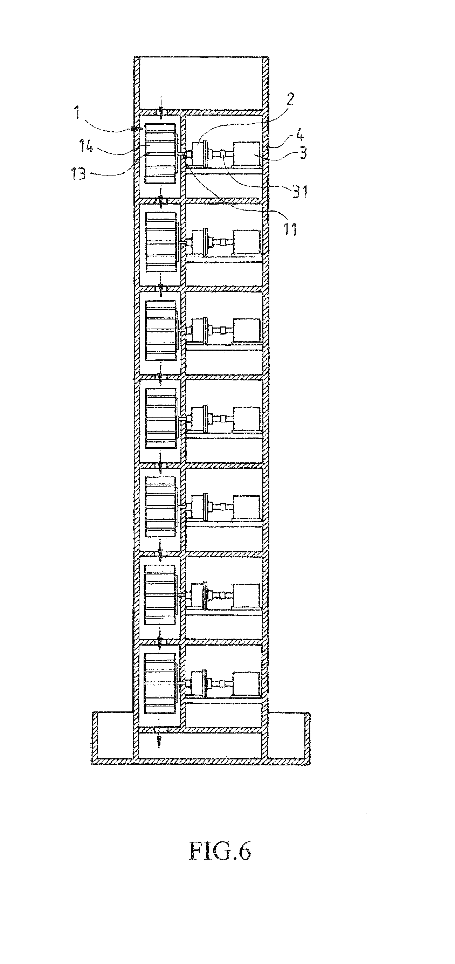

In a third embodiment of the present invention as illustrated in FIG 6, multiple rotation assemblies 1, as well as acceleration members 2 and generator member 3, are stacked vertically. When water is introduced from the top, the water fall would engage each and every one of the rotation assemblies 1. By series-connecting the generator member 3 together, significantly greater electricity power is produced and delivered.

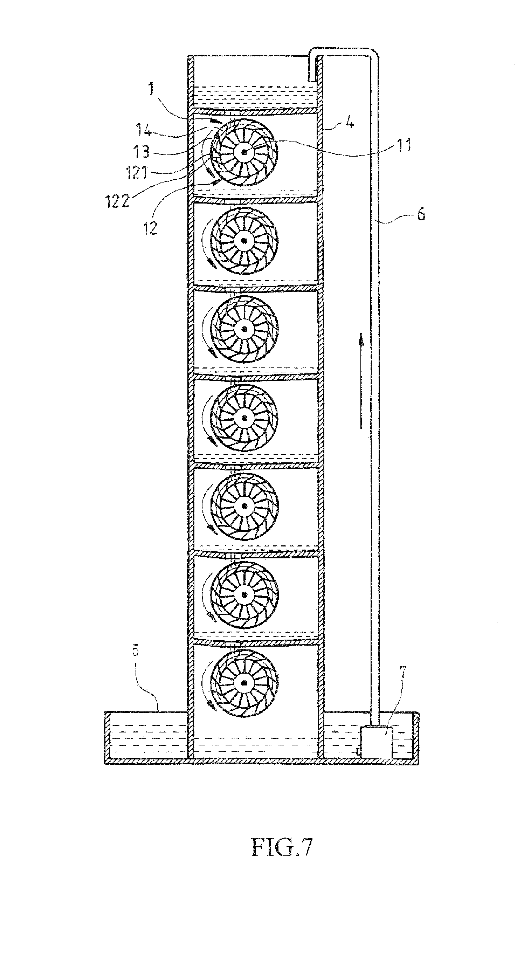

In a fourth embodiment of the present invention as illustrated in FIG 7, a water tank 5 is configured at the bottom of the vertically stacked transduction devices to collect water. A pump 7 is configured inside the tank 5 to draw water from the tank 5 to the top of the transduction devices through a pipe 6. As such, the water is recycled and the transduction devices are put to continuous operation.

While certain novel features of this invention have been shown and described and are pointed out in the annexed claim, it is not intended to be limited to the details above, since it will be understood that various omissions, modifications, substitutions and changes in the forms and details of the device illustrated and in its operation can be made by those skilled in the art without departing in any way from the spirit of the present invention.

## Claims

1. A transduction device, comprising:
a generator member (3);
an accelerator member (2) linked to said generator member (3); and
a rotation assembly (1) comprising an axle (11) and a wheel member (12) around said axle (11), said wheel member (12) having a U-shaped track around the circumference, said track being partitioned into a plurality of chambers (14) by periodically configured partition plates (13) tilted to a direction opposite to the rotation direction of said wheel member (12), said axle (11) being linked to said accelerator member (2);
wherein said transduction device is placed tangentially to a water flow so that said chambers (14) receive and accumulate water; by the weight and push of the water, said rotation assembly (1) spins in a fixed direction; further by the acceleration of said acceleration member (2), said generator member (3) is engaged to produce electrical energy.

2. The transduction device according to claim 1, wherein said rotation assembly (1) is pivotally mounted on a rack (4).

3. The transduction device according to claim 2, wherein said axle (11) of said rotation assembly (1) is joined to said rack (4) by at least a bearing.

4. The transduction device according to claim 1, wherein said U-shaped track is formed by a rim band (122) sandwiched between two ring walls (121).

5. The transduction device according to claim 1, wherein a universal joint (31) is used to couple said rotation assembly (1) and said accelerator member (2), and to couple said accelerator member (2) and said generator member (3), so as to achieve smooth transmission.

6. The transduction device according to claim 2, further comprising a second set of said rotation assembly (1), said accelerator member (2), and said generator member (3); wherein said rotation assemblies (1) are stacked vertically; said generator members (3) are series-connected; down-pouring water fall engages said rotation assemblies (1); and significantly greater electricity power is produced.

7. The transduction device according to claim 6, further comprising a water tank (5) beneath said vertically stacked rotation assemblies (1) to collect water; a pipe (6); and a pump (7) drawing water from said water tank (5) to pour on a topmost rotation assembly (1) through said pipe (6).
